# EUROPÄISCHE PATENTSCHRIFT

(11) **EP 3 782 834 B1**
(45) Veröffentlichungstag und Bekanntmachung des Hinweises auf die Patenterteilung: **13.10.2021**
(21) Anmeldenummer: 20174089.1
(22) Anmeldetag: 12.05.2020
(51) Int. Cl.: B60J 11/04

(54) **ABDECKVORRICHTUNG UND ABDECKVERFAHREN**
COVERING DEVICE AND COVERING METHOD
DISPOSITIF DE RECOUVREMENT ET PROCÉDÉ DE RECOUVREMENT

(30) Priorität: 21.08.2019 DE 102019122436
(43) Veröffentlichungstag der Anmeldung: 24.02.2021
(73) Patentinhaber: Innorgy GmbH, 31860 Emmerthal (DE)
(72) Erfinder: Khoja, Ghaias, 33100 Paderborn (DE)
(74) Vertreter: Ostermann, Thomas

(56) Entgegenhaltungen:
- WO-A2-2010/041238
- CN-A- 106 891 708
- CN-A- 108 583 251
- US-A1- 2017 166 041

## Beschreibung

Die Erfindung betrifft eine Abdeckvorrichtung für Fahrzeuge nach dem Oberbegriff des Patentanspruchs 1.

Ferner betrifft die Erfindung ein Verfahren zur Abdeckung eines Fahrzeugs, wobei eine Abdeckplane in einer Arbeitsstellung derselben das Fahrzeug obenseitig umgibt.

Aus der DE 102 12 150 A1 ist eine Abdeckvorrichtung für Fahrzeuge bekannt, die eine Abdeckplane umfasst. Die Abdeckplane wird zum Schutz des Fahrzeugs über dasselbe gelegt und mittels Befestigungselementen, wie Haken, Magneten, Saugnäpfen an einem unteren Rand der Karosserie befestigt. Nachteilig an der bekannten Abdeckvorrichtung ist, dass das Verbringen derselben in die das Fahrzeug abdeckenden Arbeitsstellung relativ zeitaufwendig ist. Darüber hinaus muss die Abdeckplane gesondert mitgeführt werden.

Aus der EP 2 165 870 A1 ist eine Abdeckvorrichtung für Fahrzeuge bekannt, die eine Abdeckplane zum Schutz des Fahrzeugs umfasst, welche mittels einer Anzahl von Stützen selbsttragend ausgebildet ist. Die Abdeckplane kann nach Art eines Zeltes von einer Seite zu einer gegenüberliegenden Seite verschwenkt werden. Nachteilig an der bekannten Abdeckvorrichtung ist, dass sie einen relativ großen Platzbedarf erfordert. Ferner ist bei dem Aufspannen von der Nichtarbeitsstellung in die Arbeitsstellung der Abdeckvorrichtung und vice versa darauf zu achten, dass das Fahrzeug nicht von den Stützen beschädigt wird.

Aus der WO 2010/041238 A2 ist eine Abdeckvorrichtung für Fahrzeuge bekannt, die eine Mehrzahl von Haltearmen aufweist, mittels derer eine Abdeckplane aus einer Nichtarbeitsstellung in eine Arbeitsstellung verbringbar ist, in der das Fahrzeug von der Abdeckplane abgedeckt ist. Nachteilig an der bekannten Abdeckvorrichtung ist, dass die Abdeckplane von hinten nach vorne über das Fahrzeug verschwenkt wird, wobei eine zusätzliche Querstange angebracht werden muss, an der die Abdeckplane gehalten ist.

Aufgabe der vorliegenden Erfindung ist es daher, eine Abdeckvorrichtung für Fahrzeuge sowie ein Verfahren zur Abdeckung von Fahrzeugen derart anzugeben, dass die Abdeckvorrichtung in der Nichtarbeitsstellung platzsparend angeordnet ist und dass die Abdeckvorrichtung handhabungstechnisch einfach in die Arbeitsstellung bzw. Nichtarbeitsstellung verbracht werden kann.

Zur Lösung dieser Aufgabe weist die Erfindung die Merkmale des Patentanspruchs 1 auf.

Ein Vorteil der erfindungsgemäßen Abdeckvorrichtung besteht darin, dass sie aufgrund der Anordnung an einem Karosseriebauteil des Fahrzeugs jederzeit verfügbar ist. Die Abdeckvorrichtung wird mit dem Fahrzeug mitgeführt und ist an einer Stelle des Fahrzeugs in einer Nichtarbeitsstellung angeordnet, in der sie die Funktionsweise des Fahrzeugs nicht behindert. Vorzugsweise ist die Abdeckvorrichtung im Bereich eines Seitenholms des Fahrzeugs angeordnet. Ein weiterer Vorteil ergibt sich daraus, dass eine Abdeckplane der Abdeckvorrichtung mittels längsverschieblichen und verschwenkbaren Haltearmen in eine das Fahrzeug abdeckenden Arbeitsstellung bringbar ist. Die Haltearme sind in der Nichtarbeitsstellung der Abdeckvorrichtung nebeneinander und/oder ineinander angeordnet, so dass sie platzsparend an einem Seitenholm des Fahrzeugs anordbar sind. Durch Verschieben und Verschwenken der Haltearme ist die Abdeckplane auf die Länge des Fahrzeugs anpassbar, wonach durch anschließendes Bewegen eines freien Randes der Abdeckplane quer zur Ausfahrrichtung des längsverschieblichen Haltearmes das Fahrzeug vollständig überdeckt werden kann.

Nach der Erfindung sind die Haltearme quer zu einem die Abdeckvorrichtung aufnehmenden Karosseriebauteil des Fahrzeugs ausfahrbar von einer Nichtarbeitsstellung in eine Seitenstellung bewegbar. In dieser Seitenstellung sind die Haltearme beabstandet zu einer vertikalen Außenkontur des Fahrzeugs angeordnet, so dass durch nachfolgendes Aufrichten und Verschwenken der Abdeckplane das Fahrzeug in der Arbeitsstellung vollständig abgedeckt ist.

Nach der Erfindung sind die Haltearme in der Seitenstellung der Abdeckvorrichtung in Längsrichtung derselben linear verschiebbar, wobei Längs-Haltearme bis zu einer Vorderseite und Rückseite des Fahrzeugs ausgefahren werden und wobei Quer-Haltearme in Fahrtrichtung und/oder quer zur Fahrtrichtung verschwenkbar angeordnet sind. Nachdem die Längs-Haltearme ausgefahren sind, kann die Abdeckplane unter Führung an den aufgestellten Quer-Haltearmen über die gesamte Seite des Fahrzeugs aufgerichtet und nachfolgend zu einer gegenüberliegenden Seite des Fahrzeugs verschwenkt werden. Dadurch, dass die Abdeckplane zuerst aufgerichtet und nachfolgend verschwenkt wird, kann das Verbringen der Abdeckplane von der Seitenstellung in die Arbeitsstellung und vice versa vereinfacht werden.

Nach einer bevorzugten Ausführungsform der Erfindung weist die Abdeckvorrichtung Antriebsmittel auf, so dass das Verschieben und/oder Verschwenken der Haltearme selbsttätig erfolgen kann.

Nach einer Weiterbildung der Erfindung ist die Abdeckplane gerollt oder gefaltet in der Nichtarbeitsstellung angeordnet. Der Haltearm dient hierbei als Mittel zum Verbringen der Abdeckplane in die platzsparende Nichtarbeitsstellung.

Nach einer Weiterbildung der Erfindung ist die Abdeckplane mit Solarzellen versehen, die über eine elektrische Verbindungsleitung mit einer Batterie des Fahrzeugs koppelbar sind. Vorteilhaft kann hierdurch während der Abdeckung des Fahrzeugs Strom erzeugt werden, für insbesondere batterieelektrisch betriebene Fahrzeuge.

Zur Lösung der Aufgabe ist die Erfindung in Verbindung mit dem Oberbegriff des Patentanspruchs 7 dadurch gekennzeichnet, dass die Abdeckplane von einer Nichtarbeitsstellung seitlich zum Fahrzeug in eine Seitenstellung verbracht wird, dass die Abdeckplane dann in einer Vorhangstellung vollständig oder teilweise aufgerichtet wird, in der die Abdeckplane sich entlang einer vertikalen Erstreckungsebene verläuft, dass die Abdeckplane aus der Vorhangstellung in die Arbeitsstellung verbracht wird, wobei ein freier Rand der Abdeckplane von der in der Vorhangstellung befindlichen ersten Seite des Fahrzeugs zu einer gegenüberliegenden zweiten Seite des Fahrzeugs verbracht wird.

Der besondere Vorteil des erfindungsgemäßen Abdeckverfahrens besteht darin, dass durch eine zeitliche Abfolge von unterschiedlichen Bewegungen die Abdeckplane auf einfache Weise von einer Nichtarbeitsstellung in eine Arbeitsstellung bringbar ist. In einem ersten Schritt wird die Abdeckplane in eine zu der Außenkontur des Fahrzeugs beabstandeten Seitenstellung verbracht. Dies kann vorzugsweise durch eine Linearbewegung der Abdeckplane sowie die Abdeckplane aufrichtenden Halteelementen erfolgen. In einem zweiten Schritt erfolgt ein Aufrichten der Abdeckplane in eine Vorhangstellung, in der sich die Abdeckplane seitlich vom Fahrzeug in einer vertikalen Erstreckungsebene verläuft. In einem abschließenden Schritt erfolgt nun das Verschwenken der Abdeckplane in Richtung einer gegenüberliegenden Seite des Fahrzeugs, so dass das Fahrzeug abgedeckt ist. Erfindungsgemäß erfolgt das Aufrichten der Abdeckplane in die Vorhangstellung durch lineares Verschieben eines freien Randes der Abdeckplane von einer unteren Stellung in eine obere Stellung. Die Abdeckplane ist somit flächig und eben vollständig oder teilweise ausgefahren bzw. ausgebreitet. Im nachfolgenden Schritt erfolgt dann das Verschwenken bzw. Bewegen des freien Randes der Abdeckplane zu der gegenüberliegenden Seite des Fahrzeugs, wobei in einer Variante der Erfindung während des Verschwenkens der Abdeckplane dieselbe weiter ausgefahren wird. Vorteilhaft kann hierdurch die mechanische Beanspruchung eines starken Seitenwindes reduziert werden. Grundgedanke des erfindungsgemäßen Abdeckverfahrens besteht darin, dass die Abdeckplane zuerst vertikal ausgebreitet wird und im anschließenden Schritt durch Verschwenken derselben das Fahrzeug abgedeckt wird.

Nach einer Weiterbildung der Erfindung wird die Abdeckplane in der Seitenstellung mittels linear beweglicher Haltearme in eine Längsstellung verbracht, aus der sie in die Vorhangstellung ausgebreitet werden kann. Die Dimension der Längsstellung ist abhängig von der Dimension des Fahrzeugs. Vorzugsweise wird die Abdeckplane so weit ausgebreitet, dass aus der Vorhangstellung heraus das gesamte Fahrzeug abgedeckt werden kann.

Nach einer Weiterbildung der Erfindung erfolgt das Bewegen der Abdeckplane von der Nichtarbeitsstellung in die Arbeitsstellung manuell oder selbsttätig. Durch die eindeutig voneinander abgegrenzten Bewegungsrichtungen wird die Handhabung der Abdeckvorrichtung vereinfacht.

Ausführungsbeispiele der Erfindung werden nachfolgend anhand der Zeichnungen näher erläutert.

Es zeigen:
- Fig. 1: eine Seitenansicht eines Fahrzeugs mit einer im Bereich eines Seitenholms angeordneten Abdeckvorrichtung in einer Nichtarbeitsstellung,
- Fig. 2: eine Draufsicht auf das Fahrzeug mit der sich in einer Seitenstellung befindlichen Abdeckvorrichtung,
- Fig. 3: eine Seitendarstellung des Fahrzeugs, wobei sich die Abdeckvorrichtung in einer Längsstellung befindet,
- Fig. 4: eine Seitenansicht des Fahrzeugs, wobei eine Abdeckplane der Abdeckvorrichtung von einer Längsstellung in eine Vorhangstellung verbracht wird,
- Fig. 5: eine Seitenansicht des Fahrzeugs mit der Abdeckvorrichtung in Vorhangstellung,
- Fig. 6: eine Vorderansicht des Fahrzeugs mit der Abdeckvorrichtung in Vorhangstellung,

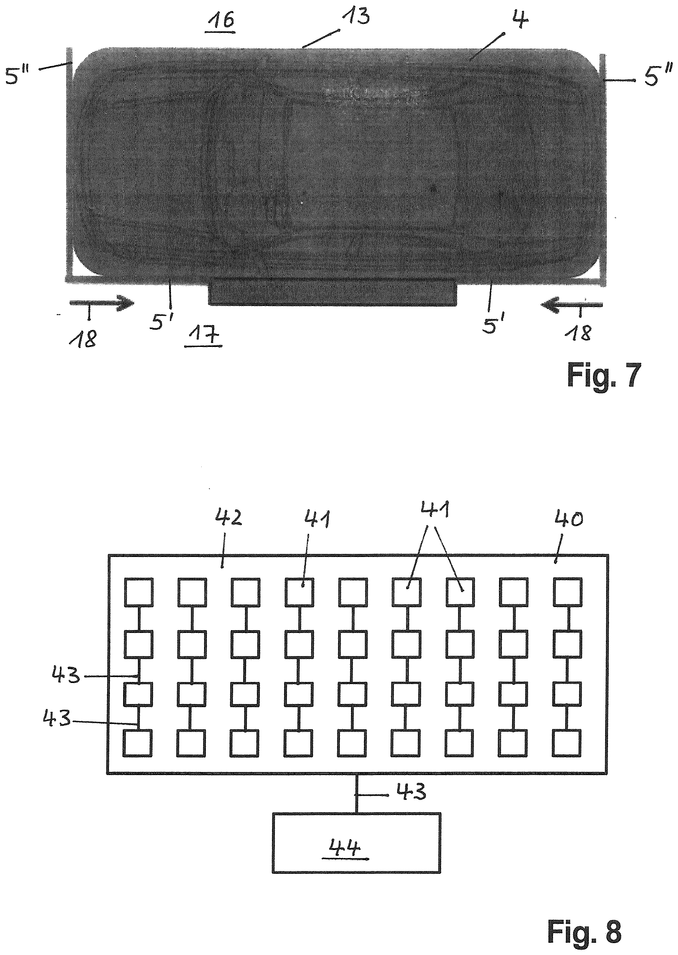

- Fig. 7: eine Draufsicht auf das Fahrzeug mit der Abdeckvorrichtung in Arbeitsstellung, wobei zur Festlegung der Abdeckplane ein vorderer und hinterer Quer-Haltearm zum Fahrzeug hin verschiebbar ist und
- Fig. 8: eine schematische Draufsicht auf eine Abdeckplane der Abdeckvorrichtung mit integrierten Solarzellen.

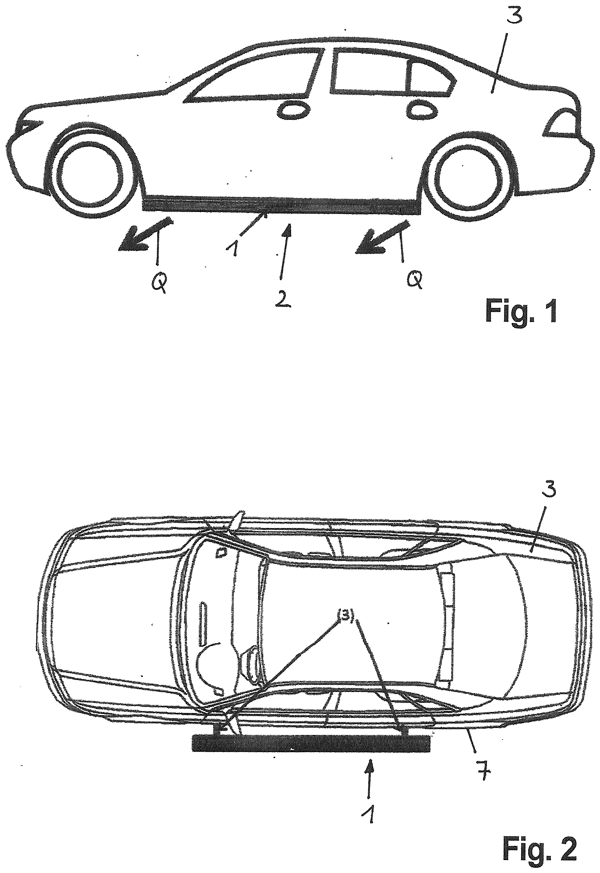

Eine Abdeckvorrichtung 1 für Fahrzeuge ist in einer Nichtarbeitsstellung vorzugsweise im Bereich eines Seitenholms 2 des Fahrzeugs 3 angeordnet. Wie aus Figur 1 ersichtlich ist, kann die Abdeckvorrichtung 1 in der Nichtarbeitsstellung unterhalb des Seitenholms 2, der als Karosseriebauteil des Fahrzeugs 3 dient, angeordnet sein. Die Abdeckvorrichtung 1 weist ein Gehäuse auf, innerhalb dessen eine Abdeckplane 4 und eine Mehrzahl von Haltearmen 5 angeordnet sind. Die Haltearme 5 dienen als Stütze für die Abdeckplane 4 mit einer tragenden Funktion. Ferner sind in dem Gehäuse der Abdeckvorrichtung 1 Antriebsmittel zum Bewegen bzw. Längsverschieben und/oder Verschwenken der Haltearme 5 vorgesehen. Die Abdeckplane 4 kann vorzugsweise aus einem Kunststoffmaterial, beispielsweise Polyestermaterial, bestehen, das vorzugsweise lichtundurchlässig ist.

In der Nichtarbeitsstellung sind die Haltearme 5 koaxial und/oder parallel zueinander angeordnet, wobei die Abdeckplane 4 gefaltet oder gerollt ausgebildet ist.

Die Abdeckvorrichtung 1 ist über nicht dargestellte Befestigungsmittel fest mit dem Fahrzeug 3 verbunden.

Im Folgenden wird das Verbringen der Abdeckplane 4 von einer Nichtarbeitsstellung in eine das Fahrzeug 3 überspannenden Arbeitsstellung beschrieben:
In einem ersten Schritt erfolgt ein Verfahren der Abdeckplane 4 und der Haltearme 5 in Querrichtung Q des Fahrzeugs 3 in eine in Figur 2 dargestellte Seitenstellung. Die Abdeckplane 4 sowie die Haltearme 5 befinden sich seitlich und quer zum Fahrzeug 3, und zwar in einem Abstand zu einer Außenkontur 7 des Fahrzeugs 3.

In einem weiteren Schritt wird die Abdeckplane 4 von der Seitenstellung in eine Längsstellung verbracht, in der sich die Abdeckplane 4 noch im zusammengerollten und/oder zusammengefalteten Zustand befindet, jedoch in Längsrichtung L des Fahrzeugs 3 eine Länge I_{A} aufweist, die größer ist als eine Länge I_{F} des Fahrzeugs 3. Zu diesem Zweck wird ein erster Längs-Haltearm 5' nach vorne linear verschoben und ein weiterer zweiter Längs-Haltearm 5' nach hinten linear verschoben. Ein Ende 8 des vorderen Längs-Haltearms 5' verläuft in einer vertikalen Ebene, die in Fahrtrichtung vor einer Vorderseite 10 des Fahrzeugs 3 angeordnet ist. Ein freies Ende 9 des hinteren Längs-Haltearms 5' ist in einer vertikalen Ebene angeordnet, die sich hinter einer Rückseite 11 des Fahrzeugs 3 befindet.

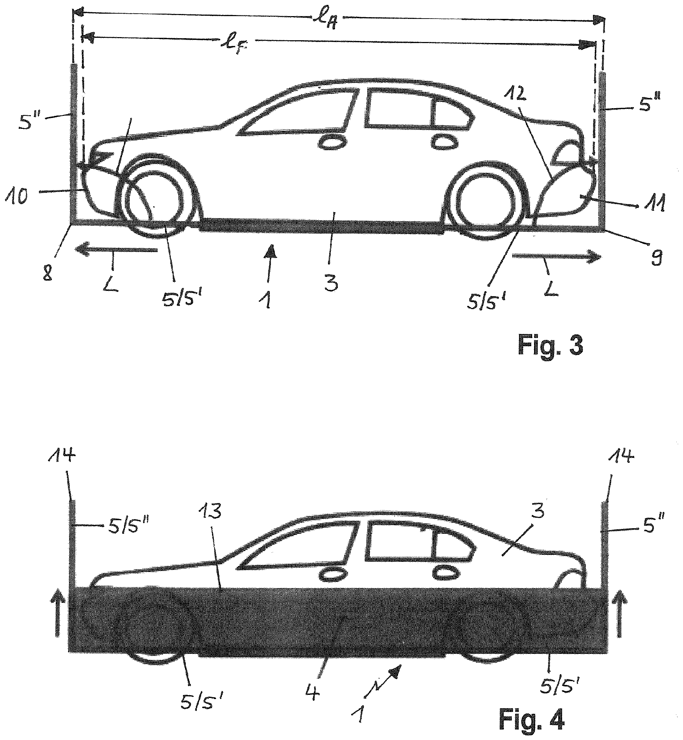

Darüber hinaus ist dem vorderen und dem hinteren Längs-Haltearm 5' jeweils ein Quer-Haltearm 5" zugeordnet, der jeweils in eine aufrechte Position bringbar ist. Zu diesem Zweck ist der Quer-Haltearm 5" über ein Gelenk schwenkbar zu dem jeweiligen Längs-Haltearm 5' gelagert. Wie aus Figur 3 ersichtlich ist, werden der vordere und hintere Quer-Haltearm 5" jeweils um einen rechten Winkel entsprechend Pfeil 12 verschwenkt.

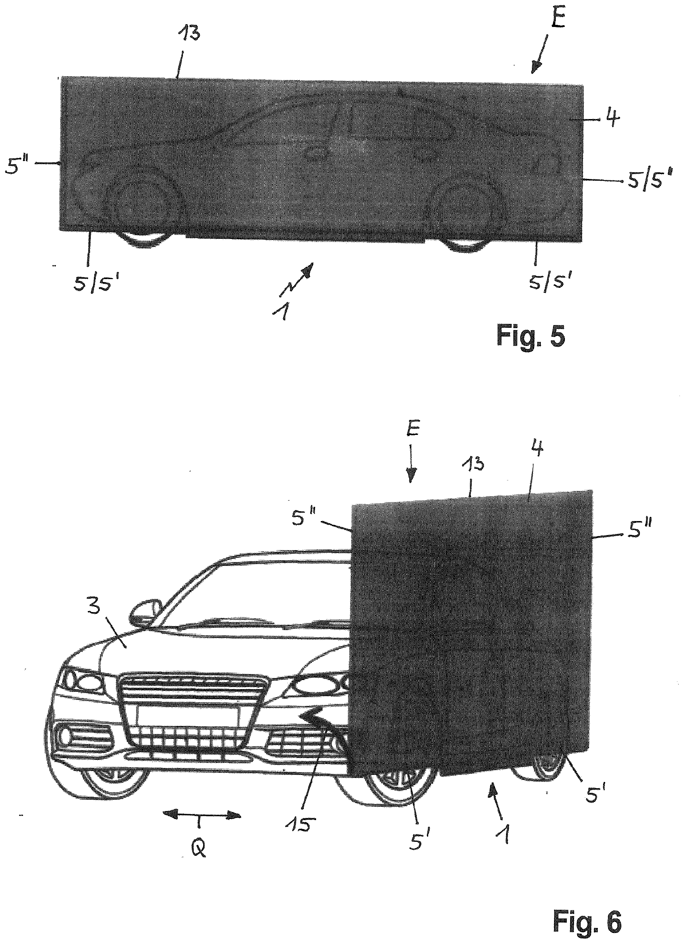

In einem weiteren Schritt wird die Abdeckplane 4 nun von der Längsstellung in eine Vorhangstellung verbracht, in der sich die Abdeckplane 4 in einer vertikalen Erstreckungsebene E erstreckt, s. Figur 5 und Figur 6. Hierzu wird ein freier Rand 13 der Abdeckplane 4 unter Führung an den aufrechten Quer-Haltearmen 5" bis zu einem freien Ende 14 der Quer-Haltearme 5" bewegt. Die Abdeckplane 4 befindet sich nun in einer aufgerichteten Stellung. Die Abdeckplane 4 ist vollständig aus dem Gehäuse der Abdeckvorrichtung 1 ausgefahren (bei elektrischer Betätigung der Abdeckvorrichtung 1) oder ausgezogen (bei manueller Betätigung der Abdeckvorrichtung 1) und befindet sich in einer Endstellung.

Alternativ kann die Abdeckplane 4 auch unter teilweisem Ausfahren derselben (bei elektrischer Betätigung der Abdeckvorrichtung 1) und/oder unter teilweisem Ausziehen derselben (bei manueller Betätigung der Abdeckvorrichtung 1) in die Vorhangstellung verbracht werden. Hierdurch kann die mechanische Beanspruchung (Seitenkräfte) der Abdeckplane 4 in der Vorhangstellung begrenzt werden.

In einem weiteren Schritt erfolgt nun das Verbringen der Abdeckplane 4 von der Vorhangstellung in eine Arbeitsstellung, in der das Fahrzeug 3 vollständig von der Abdeckplane 4 abgedeckt ist. Zu diesem Zweck werden die Quer-Haltearme 5" in Querrichtung Q des Fahrzeugs 3 um 90° verschwenkt, s. Pfeil 15 in Figur 6, bis der freie Rand 13 der Abdeckplane 4 auf einer gegenüberliegenden zweiten Seite 16 des Fahrzeugs 3 angeordnet ist. Hierbei kann sich die Abdeckplane 4 über das Fahrzeug 3 legen. Die Längs-Haltearme 5' sind weiterhin auf einer ersten Seite 17 des Fahrzeugs 3 angeordnet. Eine Länge I_{Q} der Quer-Haltearme 5" ist vorzugsweise größer als eine Quererstreckung des Fahrzeugs 3. Damit sich die Abdeckplane 4 bauchig über das Fahrzeug 3 ausbreitet, ist die Quererstreckung der Abdeckplane 4 größer als die Quererstreckung des Fahrzeugs 3. Wenn die Abdeckplane 4 in der Vorhangstellung nicht vollständig, sondern teilweise ausgefahren bzw. ausgezogen war, wird sie während des Bewegens in die Arbeitsstellung bzw. während des Verschwenkens der Quer-Haltearme 5" weiter aus dem Gehäuse der Abdeckvorrichtung 1 ausgezogen bzw. ausgefahren, und zwar in die Endstellung.

Nach einer bevorzugten Ausführungsform der Erfindung können die Längs-Haltearme 5' abschließend nach innen in Pfeilrichtung 18 bewegt werden, so dass sich die Quer-Haltearme 5" bzw. vorderer und rückseitiger Rand der Abdeckplane 4 unter die Vorderseite 10 bzw. Rückseite 11 des Fahrzeugs 3 legen können. Die Abdeckplane 4 spannt somit das Fahrzeug 3 vollständig ein.

Die vorgenannten Bewegungsschritte können manuell und/oder durch die Antriebsmittel selbsttätig erfolgen.

Das Verbringen der Abdeckplane 4 aus der Arbeitsstellung in die Nichtarbeitsstellung erfolgt in umgekehrter Reihenfolge.

Nach einer nicht dargestellten alternativen Ausführungsform der Erfindung kann die Abdeckvorrichtung 1 auch an der Vorderseite 10 oder Rückseite 11 des Fahrzeugs 3 angeordnet sein. Hierbei wird die Abdeckplane 4 aus der Vorhangstellung seitlich zu der Vorderseite 10 oder der Rückseite 11 des Fahrzeugs 3 nicht in Querrichtung Q zum Fahrzeug 3, sondern in Längsrichtung L zum Fahrzeug 3 verschwenkt.

Nach einer weiteren Ausführungsform der Erfindung kann eine Abdeckplane 40 vorgesehen sein, die mit einer Mehrzahl von verteilt angeordneten Solarzellen 41 versehen ist. Die Solarzellen 41 sind an einer Oberfläche 42 der Abdeckplane 40 eingearbeitet und/oder aufgesetzt. Die Solarzellen 41 sind - wie das Material der Abdeckplane 40 - verbiegbar ausgebildet. Die Solarzellen 41 ermöglichen die Umwandlung von Strahlungsenergie, insbesondere des Sonnenlichtes, während der Arbeitsstellung in elektrische Energie. Über elektrische Leitungen 43 kann die elektrische Energie einer Batterie 44 des Fahrzeugs 3 zugeführt werden. Das Fahrzeug 3 ist in diesem Fall vorzugsweise als ein batterieelektrisches Fahrzeug ausgebildet.

## Patentansprüche

1. Abdeckvorrichtung für Fahrzeuge mit einer Abdeckplane (4), die in einer Arbeitsstellung das Fahrzeug (3) zumindest teilweise abdeckt, und mit einer Anzahl von die Abdeckplane (4, 40) tragenden Stützen, die schwenkbar gelagert sind, wobei die Abdeckvorrichtung (1) über Befestigungsmittel mit einem Karosseriebauteil (2) des Fahrzeugs (3) verbunden ist und die Stützen als Haltearme (5, 5', 5") ausgebildet sind, die zwischen einer Nichtarbeitsstellung der Abdeckplane (4, 40), in der die Haltearme (5, 5', 5") koaxial und/oder parallel zueinander angeordnet sind, und einer Arbeitsstellung der Abdeckplane (4, 40), in der die Haltearme (5, 5', 5") in Längsrichtung (L) verschoben und/oder in Querrichtung (Q) verschwenkt angeordnet sind unter Abdecken des Fahrzeugs (3), bewegbar angeordnet sind, wobei die Haltearme (5, 5', 5") seitlich zu einem Karosseriebauteil (2) des Fahrzeugs (3) ausfahrbar in eine Seitenstellung bewegbar sind, in der die Haltearme (5, 5', 5") seitlich zum Fahrzeug (3) angeordnet sind, wobei die Haltearme (5, 5', 5") in der Seitenstellung der Abdeckvorrichtung (1) in Längsrichtung (L) des Fahrzeugs (3) linear verschiebbar sind, wobei Längs-Haltearme (5') bis zu einer Vorderseite (10) und/oder einer Rückseite (11) des Fahrzeugs (3) linear verschiebbar sind und wobei Quer-Haltearme (5") in Fahrtrichtung und/oder quer zur Fahrtrichtung verschwenkbar angeordnet sind, **dadurch gekennzeichnet, dass** die Abdeckplane (4, 40) in eine Vorhangstellung vollständig oder teilweise aufrichtbar ist, in der die Abdeckplane (4, 40) entlang einer vertikalen Erstreckungsebene (E) verläuft.

2. Abdeckvorrichtung nach Anspruch 1, **dadurch gekennzeichnet, dass** die Abdeckvorrichtung (1) Antriebsmittel aufweist zum Verschieben und/oder Verschwenken der Haltearme (5, 5', 5").

3. Abdeckvorrichtung nach Anspruch 1 oder 2, **dadurch gekennzeichnet, dass** der Quer-Haltearm (5") an einem freien Ende (8, 9) des Längs-Haltearms (5') angelenkt ist.

4. Abdeckvorrichtung nach einem der Ansprüche 1 bis 3, **dadurch gekennzeichnet, dass** die Abdeckplane (4, 40) randseitig an dem Längs-Haltearm (5') und dem Quer-Haltearm (5") befestigt und/oder geführt angeordnet ist.

5. Abdeckvorrichtung nach einem der Ansprüche 1 bis 4, **dadurch gekennzeichnet, dass** in der Nichtarbeitsstellung die Abdeckplane (4, 40) gerollt oder gefaltet in einem Gehäuse der Abdeckvorrichtung (1) gelagert ist.

6. Abdeckvorrichtung nach einem der Ansprüche 1 bis 5, **dadurch gekennzeichnet, dass** die Abdeckplane (40) Solarzellen (41) aufweist zur Erzeugung eines elektrischen Stromes und dass die Solarzellen (41) über eine elektrische Leitung (43) mit einer Batterie (44) des Fahrzeugs (3) gekoppelt sind.

7. Verfahren zur Abdeckung eines Fahrzeugs (3), wobei eine Abdeckplane (4, 40) in einer Arbeitsstellung derselben das Fahrzeug (3) obenseitig umgibt, **dadurch gekennzeichnet,**
- **dass** die Abdeckplane (4, 40) von einer Nichtarbeitsstellung seitlich zum Fahrzeug (3) in eine Seitenstellung verbracht wird,
- **dass** die Abdeckplane (4, 40) dann in einer Vorhangstellung vollständig oder teilweise aufgerichtet wird, in der die Abdeckplane (4) sich entlang einer vertikalen Erstreckungsebene (E) verläuft,
- **dass** die Abdeckplane (4, 40) aus der Vorhangstellung in die Arbeitsstellung verbracht wird, wobei ein freier Rand (13) der Abdeckplane (4, 40) von der in der Vorhangstellung befindlichen ersten Seite (17) des Fahrzeugs (3) zu einer gegenüberliegenden zweiten Seite (16) des Fahrzeugs (3) verbracht wird.

8. Verfahren nach Anspruch 7, **dadurch gekennzeichnet, dass** die Abdeckplane (4, 40) von der Seitenstellung in Fahrzeuglängsrichtung (L) nach vorne und/oder nach hinten in eine Längsstellung bewegt wird, aus der sie entlang eines Haltearms (5") geführt in die Vorhangstellung aufgerichtet wird.

9. Verfahren nach Anspruch 7 oder 8, **dadurch gekennzeichnet, dass** die Abdeckplane (4, 40) manuell oder zumindest teilweise selbsttätig von der Nichtarbeitsstellung in die Arbeitsstellung und vice versa bewegt wird.

## Claims

1. A covering device for vehicles having a covering tarp (4) which, in a working position, at least partially covers the vehicle (3) and having a number of supports bearing the covering tarp (4, 40) which are swivelably mounted, wherein
the covering device (1) is connected with a chassis component (2) of the vehicle (3) via an attachment means and the supports are formed as retaining arms (5, 5', 5") which are arranged to be movable between a non-working position of the covering tarp (4, 40) in which the retaining arms (5, 5', 5") are arranged coaxially and/or in parallel to each other and a working position of the covering tarp (4, 40) in which the retaining arms (5, 5', 5") are arranged to be displaced in the longitudinal direction (L) and/or swiveled in the transverse direction (Q) to cover the vehicle (3), wherein
the retaining arms (5, 5', 5") are, laterally to a chassis component (2) of the vehicle (3), extendably movable into a side position in which the retaining arms (5, 5', 5") are arranged laterally to the vehicle (3), wherein
the retaining arms (5, 5', 5") are linearly displaceable in the longitudinal direction (L) of the vehicle (3) in the side position of the covering device (1), wherein longitudinal retaining arms (5') are linearly displaceable up to a front side (10) and/or back side (11) of the vehicle (3) and wherein transverse arms (5") are swivelably arranged in the driving direction and/or transversely to the driving direction,
**characterized in that** the covering tarp (4, 40) is completely or partially raisable into a curtain position in which the covering tarp (4, 40) runs along a vertical extension plane (E).

2. The covering device according to Claim 1, **characterized in that** the covering device (1) has driving means for displacing and/or swiveling the retaining arms (5, 5', 5").

3. The covering device according to Claim 1 or 2, **characterized in that** the transverse retaining arm (5") is jointed at a free end (8, 9) of the longitudinal arm (5').

4. The covering device according to any one of Claims 1 to 3, **characterized in that** the covering tarp (4, 40) is attached or guidedly arranged at the edge of the longitudinal retaining arm (5') and the transverse retaining arm (5").

5. The covering device according to any one of Claims 1 to 4, **characterized in that**, in the non-working position, the covering tarp (4, 40) is mounted rolled or folded in a housing of the covering device (1).

6. The covering device according to any one of the Claims 1 to 5, **characterized in that** the covering tarp (40) has solar cells (41) for generating an electric current and **in that** the solar cells (41) are coupled to a battery (44) of the vehicle (3) via an electrical line (43).

7. A method for covering a vehicle (3), wherein a covering tarp (4, 40), in a working position thereof, surrounds the vehicle (3) at the top side,
**characterized in that**
- the covering tarp (4, 40) is brought from a non-working position lateral to the vehicle (3) into a side position,
- the covering tarp (4, 40) is then completely or partially raised in a curtain position in which the covering tarp (4) runs along a vertical extension plane (E),
- the covering tarp (4, 40) is brought from the curtain position into the working position, wherein a free edge (13) of the covering tarp (4, 40) is brought from a first side (17) of the vehicle (3) in the curtain position to an opposing second side (16) of the vehicle (3).

8. The method according to Claim 7, **characterized in that** the covering tarp (4, 40) is moved from the side position in the vehicle longitudinal direction (L) forward and/or backward into a longitudinal position from which it is guided along a retaining arm (5") to be raised into the curtain position.

9. The method according to Claim 7 or 8, **characterized in that** the covering tarp (4, 40) is manually or at least partially autonomously moved from the non-working position into the working position and vice versa.

## Revendications

1. Dispositif de recouvrement de véhicules avec une bâche (4), qui recouvre au moins en partie le véhicule (3) dans une position fonctionnelle, et avec un nombre de supports de bâche (4, 40), qui sont montés de façon pivotante, dans lequel
le dispositif de recouvrement (1) est relié à un composant de carrosserie (2) du véhicule (3) par des moyens de fixation et les supports sont conçus sous la forme de bras de maintien (5, 5', 5"), qui sont disposés de façon mobile entre une position non fonctionnelle de la bâche (4, 40), dans laquelle les bras de maintien (5, 5', 5") sont disposés coaxialement et/ou parallèlement les uns aux autres, et une position fonctionnelle de la bâche (4, 40), dans laquelle les bras de maintien (5, 5', 5") sont disposés de façon à être déportés dans le sens longitudinal (L) et/ou à pivoter dans le sens transversal (Q) pendant le recouvrement du véhicule (3), dans lequel
les bras de maintien (5, 5', 5") sont mobiles latéralement par rapport à un composant de carrosserie (2) du véhicule (3) de façon à être déployés dans une position latérale, dans laquelle les bras de maintien (5, 5', 5") sont disposés latéralement par rapport au véhicule (3), dans lequel
les bras de maintien (5, 5', 5") sont déplaçables linéairement dans le sens longitudinal (L) du véhicule (3) en position latérale du dispositif de recouvrement (1), dans lequel des bras de maintien longitudinaux (5') sont déplaçables linéairement jusqu'à un côté avant (10) et/ou un côté arrière (11) du véhicule (3) et dans lequel des bras de maintien transversaux (5") sont disposés de façon pivotable dans le sens du déplacement et/ou transversalement par rapport au sens du déplacement,
**caractérisé en ce que** la bâche (4, 40) peut être complètement ou partiellement dressée dans une position de rideau, où la bâche (4, 40) se déploie le long d'un plan d'extension vertical (E).

2. Dispositif de recouvrement selon la revendication 1, **caractérisé en ce que** le dispositif de recouvrement (1) présente des moyens d'entraînement pour déplacer et/ou faire pivoter les bras de maintien (5, 5', 5").

3. Dispositif de recouvrement selon la revendication 1 ou 2, **caractérisé en ce que** le bras de maintien transversal (5") est articulé à une extrémité libre (8, 9) du bras de maintien longitudinal (5').

4. Dispositif de recouvrement selon l'une des revendications 1 à 3, **caractérisé en ce que** la bâche (4, 40) est disposée en bordure de façon à être fixée et/ou guidée sur le bras de maintien longitudinal (5') et le bras de maintien transversal (5").

5. Dispositif de recouvrement selon l'une des revendications 1 à 4, **caractérisé en ce que** la bâche (4, 40) est logée de façon à être roulée ou pliée dans un coffret du dispositif de recouvrement (1) en position non fonctionnelle.

6. Dispositif de recouvrement selon l'une des revendications 1 à 5, **caractérisé en ce que** la bâche (40) présente des cellules solaires (41) pour produire un courant électrique et que les cellules solaires (41) sont couplées à une batterie (44) du véhicule (3) par une ligne électrique (43).

7. Procédé de recouvrement d'un véhicule (3), dans lequel une bâche (4, 40) entoure le véhicule (3) par le haut dans sa position fonctionnelle,
**caractérisé en ce**
- **que** la bâche (4, 40) est transférée d'une position non fonctionnelle sur le côté du véhicule (3) vers une position latérale,
- **que** la bâche (4. 40) est ensuite dressée complètement ou partiellement dans une position de rideau, où la bâche (4, 40) se déploie le long d'un plan d'extension vertical (E),
- **que** la bâche (4, 40) est transférée de la position de rideau vers la position fonctionnelle, sachant qu'un bord libre (13) de la bâche (4, 40) est transféré du premier côté (17) du véhicule (3) dans la position de rideau vers un second côté opposé (16) du véhicule (3).

8. Procédé selon la revendication 7, **caractérisé en ce que** la bâche (4, 40) est déplacée vers l'avant et/ou vers l'arrière dans le sens longitudinal du véhicule (L) de la position latérale en position longitudinale, à partir de laquelle elle est dressée dans la position de rideau en étant guidée le long d'un bras de maintien (5").

9. Procédé selon la revendication 7 ou 8, **caractérisé en ce que** la bâche (4, 40) est déplacée manuellement ou au moins en partie automatiquement de la position non fonctionnelle vers la position fonctionnelle et vice versa.
